# FASCICULE DE BREVET EUROPEEN

(11) **EP 1 654 912 B1**
(45) Date de publication et mention de la délivrance du brevet: **30.07.2008**
(21) Numéro de dépôt: 04767931.1
(22) Date de dépôt: 30.07.2004
(51) Int. Cl.: H05B 33/12, H05B 33/14, H01J 1/72, H01J 29/32

(54) **ELEMENT LUMINEUX COMPORTANT AU MOINS UN SUBSTRAT ET UN REVETEMENT EMETTANT DE LA LUMIERE**
LEUCHTELEMENT MIT MINDESTENS EINEM SUBSTRAT UND EINER LICHTEMITTIERENDEN BESCHICHTUNG
LUMINOUS ELEMENT COMPRISING AT LEAST ONE SUBSTRATE AND A LIGHT-EMITTING COATING

(30) Priorité: 08.08.2003 DE 10336283
(43) Date de publication de la demande: 10.05.2006
(73) Titulaire: SAINT-GOBAIN GLASS FRANCE, 92400 Courbevoie (FR)
(72) Inventeur: OFFERMANN, Volkmar, 52249 ESCHWEILER (DE); MÄUSER, Helmut, 52134 HERZOGENRATH (DE)
(74) Mandataire: Colombier, Christian
(86) Numéro de dépôt international: PCT/FR2004/050370
(87) Numéro de publication internationale: WO 2005/018283

(56) Documents cités:
- EP-A- 1 053 910
- DE-A- 10 108 302
- DE-A- 19 703 398
- DE-C- 10 126 868
- DE-C- 19 512 864

## Description

L'invention se rapporte à un élément lumineux plat comportant au moins un substrat et un revêtement assemblé à plat à celui-ci et émettant de la lumière, qui comprend plusieurs éléments lumineux pouvant être électriquement connectés séparément les uns à côté des autres, dans des parties différentes de la surface, pour obtenir des effets lumineux différents.

Par le document DE-C1 101 26 868, on connaît un élément lumineux plat avec ces caractéristiques, qui est constitué essentiellement par un élément feuilleté composé de deux substrats et d'une couche adhésive assemblant celles-ci, l'élément lumineux proprement dit étant disposé dans le plan de la couche adhésive. Il est constitué de telle façon que seules des surfaces partielles (opaques) émettent de la lumière, tandis que la lumière peut passer à travers d'autres surfaces partielles. Il peut être prévu plusieurs éléments lumineux pouvant être connectés séparément les uns à côté des autres dans différentes parties de la surface, les électrodes et les raccords conduisant le courant pouvant être masqués de façon simple sous le revêtement opaque. Dans un tel cas, l'électrode laissant passer la lumière peut éventuellement être utilisée en commun (masse) pour tous les éléments lumineux. On peut ainsi obtenir des effets lumineux différents, ou aussi piloter l'intensité lumineuse en plusieurs étapes (en fonction de la surface lumineuse respective et éventuellement de sa couleur).

Un substrat de fenêtre partiellement transparent peut à l'état monté de l'élément lumineux et pour une surface ou une intensité lumineuse suffisante, remplacer comme substrat de toit dans une automobile un éclairage séparé de l'espace intérieur dans un véhicule à moteur, une certaine quantité de lumière pouvant encore pénétrer par le haut à travers le toit vitré sous la lumière du jour.

Le document DE-A1-101 08 302 décrit un autre élément lumineux plat, dans lequel les surfaces émettant de la lumière peuvent être disposées sur un cadre d'un couvercle transparent comme par exemple un toit ouvrant d'un véhicule automobile. Une intégration des éléments lumineux montés sur des films dans un élément feuilleté n'est pas prévue ici.

Le document EP-A2-1.053 910 divulgue également un éclairage de l'espace intérieur pour des véhicules à base de films lumineux plats électroluminescents. Ceux-ci peuvent être disposés en des endroits quelconques d'un véhicule. Une commande différenciée des différentes zones de la surface d'un élément lumineux n'y est pas divulguée.

L'invention a pour objet de procurer un autre domaine d'utilisation d'un élément lumineux plat de cette nature.

Conformément à l'invention, ce problème est résolu par les caractéristiques de la revendication 1. Les caractéristiques des revendications dépendantes présentent des formes de réalisation avantageuses de cette invention.

Conformément à l'invention, l'élément lumineux plat est dès lors agrandi d'au moins un élément lumineux séparé qui, par comparaison avec une émission plutôt diffuse du reste du champ lumineux, émet une lumière dirigée. Celui-ci peut être disposé de préférence dans le même plan que l'élément lumineux plat, donc soit en surface sur un substrat unique comme substrat de support, soit à l'intérieur d'un composite de deux substrats. La constitution respectivement la disposition de l'élément lumineux plat est en l'occurrence secondaire; il peut par exemple être un éclairage en pleine surface, ou en forme de cadre ou structuré en forme de trame.

L'élément lumineux séparé peut en principe toujours être connecté en même temps que l'unité d'éclairage plate. De préférence, il pourra cependant être connecté et déconnecté séparément, et les moyens de connexion pourront être disposés aussi bien à proximité de chaque élément lumineux séparé (commande locale) qu'à distance de ceux-ci. On peut par exemple également prévoir qu'ils soient connectés automatiquement lors de l'arrêt d'un véhicule.

Dans le cas d'une commande locale, on pourrait utiliser des interrupteurs sensitifs ou par écran tactile connus en soi, qui sont sensibles au contact ou à l'approche. En posant par exemple un doigt sur la surface de commande, l'élément lumineux séparé correspondant pourrait être activé, et ensuite désactivé en répétant le contact. L'arrivée de courant pour ces interrupteurs et les éléments de commutation et de commande correspondants disposés à l'intérieur ou à l'extérieur de l'élément lumineux plat pourrait éventuellement même être jointe à celle pour l'élément lumineux lui-même. Le cas échéant, de tels éléments de commutation pourraient même également être intégrés dans un élément feuilleté et ne devraient ainsi pas nécessairement s'élever au-dessus d'une surface lisse émettrice de lumière.

Un domaine d'utilisation particulièrement préféré d'un tel élément lumineux séparé à lumière concentrée est une lampe de lecture intégrée, sous une forme particulièrement discrète, dans un élément plat à surface lisse comme par exemple un substrat de toit d'un véhicule ou un toit ouvrant, qui permet à un occupant, dans l'espace intérieur assombri d'un véhicule, par exemple d'étudier ou de lire une carte routière sans gêner/éblouir ainsi sensiblement d'autres occupants du véhicule. Une lampe de lecture séparée, telle qu'elle est prévue en plus de l'éclairage normal de l'espace intérieur du véhicule dans des véhicules conventionnels, outre son volume d'encombrement et son câblage, peut donc être supprimée. Avec la configuration conforme à l'invention, on procure donc une solution particulièrement élégante et en outre également économique. Bien entendu, on peut également réaliser d'autres applications d'éclairage ou de mise en valeur, par exemple l'éclairage ciblé (automatique) de systèmes d'ouverture de portières ou d'autres éléments fonctionnels dans un véhicule.

Bien entendu, de tels éléments lumineux plats ne conviennent pas uniquement pour une utilisation dans des véhicules, mais ils peuvent également être utilisés dans des bâtiments ou selon le cas pour l'équipement de locaux dans des commerces et des habitations. Par exemple, on peut mentionner l'éclairage d'armoires, dans lesquelles un tel élément lumineux pourrait être installé comme plafond ou même comme planche intermédiaire et il peut y procurer, en plus d'un éclairage de surface de l'espace intérieur, un éclairage local accentué par exemple d'un élément fonctionnel, de structure ou de design particulier.

On peut imaginer de superposer encore la puissance d'éclairage accrue de l'élément lumineux séparé à l'éclairage de surface, c'est-à-dire, à l'état "normal" avec l'élément lumineux séparé non connecté, d'émettre à cet endroit une puissance lumineuse moins grande, lorsque l'élément lumineux plat dans son ensemble est connecté.

Cette émission différenciée serait par exemple possible lorsque, comme dans l'état de la technique cité dans l'introduction, l'émission lumineuse plate est résolue en une grille ou analogue. On pourrait alors incorporer l'élément lumineux séparé dans cette même grille, ou en d'autres termes insérer ses éléments plats lumineux dans des parties de la surface de la grille non utilisées jusqu'à présent comme surfaces lumineuses.

Une plus grande densité de lumière ou une plus grande puissance lumineuse est naturellement obtenue également lorsque le ou chaque élément lumineux séparé est disposé avec toute sa surface dans une surface lumineuse par ailleurs tramée. Dans un tel cas, on pourrait utiliser la même matière électroluminescente que pour l'élément lumineux plat.

Au contraire, la possibilité est toujours ouverte d'utiliser pour le ou chaque élément lumineux séparé une matière électroluminescente particulièrement puissante.

Pour l'orientation et la concentration de la lumière émise par l'élément lumineux séparé, il est prévu, selon une forme de réalisation préférée, un dispositif optique dans la zone de la surface couverte par l'élément lumineux. Celui-ci peut être une simple lentille, qui est prévue soit directement sur l'élément lumineux soit sur ou dans un substrat recouvrant celui-ci dans la direction d'émission de la lumière. Une telle lentille peut éventuellement aussi être façonnée dans un élément ou substrat de couverture en verre ou en matière plastique (par rodage, pressage) ou aussi être placée dans une cavité de l'élément sous forme de pièce séparée. Cette dernière variante peut être intéressante lorsque la face munie de la lentille est placée à l'intérieur dans un élément feuilleté, de telle sorte que la surface extérieure du substrat puisse rester lisse.

On peut cependant insérer de préférence et de façon particulièrement simple dans un élément feuilleté une lentille plane, qui ne présente elle-même qu'une très faible épaisseur, mais qui assure néanmoins une bonne concentration et une bonne orientation de la lumière. Naturellement, une telle lentille plane, tant en matière plastique qu'en verre, pourrait aussi être posée à l'extérieur sur l'élément ou substrat de couverture.

La concentration et l'orientation nécessaires de la lumière peuvent également être obtenues à l'aide d'un élément holographique (hologramme spatial), qui est à nouveau disposé dans ladite zone de la surface de l'élément lumineux séparé et qui est transparent pour son rayonnement lumineux. De tels éléments holographiques peuvent être réalisés sous la forme de films avec des microprismes, qui peuvent fournir une orientation et une concentration très précises de la lumière pour une épaisseur négligeable. Avec ceux-ci, on peut même obtenir des angles de déviation particulièrement grands par rapport à la direction normale d'émission perpendiculaire au plan du substrat (voir à cet effet par exemple DE-C1 195 12 864 ou DE-C2 197 03 398).

Un comportement analogue de déviation et d'orientation peut être obtenu avec des miroirs plans, qui sont également transparents pour la lumière émise par l'élément lumineux, mais qui la dévient en même temps, selon leur conception, plus ou moins fortement par rapport à la direction d'incidence.

Non sans une certaine élévation locale au-dessus de la surface de l'élément lumineux, mais cependant avec un effet particulier, on pourrait obtenir la possibilité de réglage à volonté du rayon orienté. A cet effet, il faudrait placer un dispositif optique avec des miroirs, des lentilles ou analogues, mobiles à la main ou au moyen d'une télécommande (miniature), sur la surface extérieure de l'élément lumineux à l'endroit à partir duquel l'élément lumineux séparé émet.

D'autres détails et avantages de l'objet de l'invention apparaîtront dans les dessins d'un exemple de réalisation et par leur description détaillée qui suit.

Dans ces dessins, qui sont des représentations simplifiées sans échelle particulière,
La Fig. 1 est une vue d'une forme de réalisation, dans laquelle un élément ou substrat de toit avec un éclairage tramé sur toute la surface de façon connue en soi comprend deux éléments lumineux séparés,
La Fig. 2 montre une vue en coupe de principe de la Fig. 1 suivant la ligne II-II,
La Fig. 3 montre une variante de détail d'une vue en coupe comme dans la Fig. 2, et
La Fig. 4 montre une autre variante de détail d'une vue en coupe comme dans la Fig. 2.

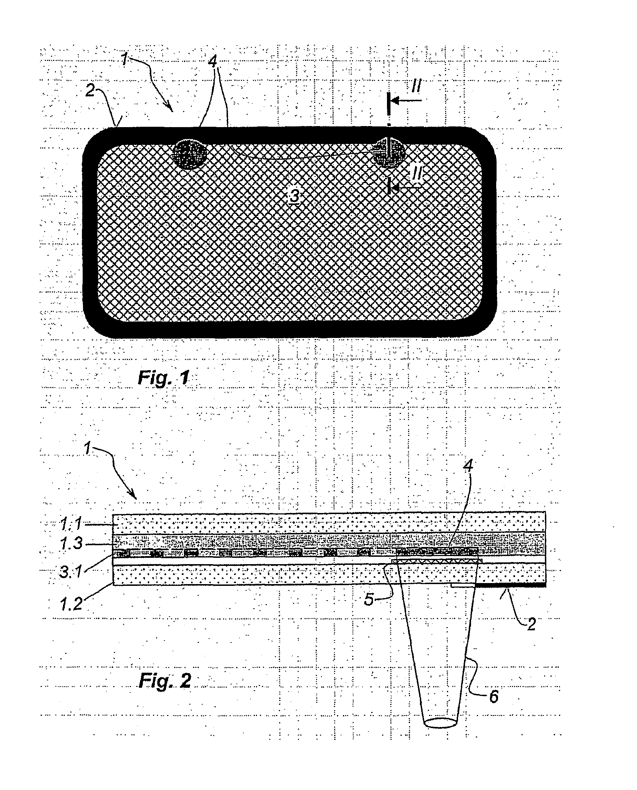

La Fig. 1 montre un élément lumineux plat 1 de forme rectangulaire avec un cadre opaque 2 et un champ lumineux 3. Ce dernier est configuré de façon connue en une trame, qui se compose de parties de surface laissant passer la lumière et de parties de surface opaques. Ce tramage n'est cependant pas nécessaire pour le fonctionnement. Il peut être remplacé par une configuration de surface entière, si la transparence partielle à la lumière n'est pas nécessaire ou souhaitée. La fonction d'éclairage proprement dite est obtenue par électroluminescence d'une façon également connue en soi. Pour une description plus précise du mode de fonctionnement de tels éléments, on se référera simplement à l'état de la technique mentionné dans l'introduction.

Sur une face longitudinale de l'élément lumineux 1, il est prévu deux éléments lumineux séparés 4. Ceux-ci peuvent, comme cela est montré ici, recouvrir partiellement ou entièrement le cadre opaque 2, ou aussi être situés entièrement dans la région de la surface du champ lumineux 3, sans recouvrir ou toucher le cadre 2. Les éléments lumineux séparés 4 sont des zones de puissance ou densité lumineuse accrue.

Bien entendu, les éléments lumineux 4 peuvent aussi être disposés de façon asymétrique.

Comme on peut mieux le voir dans la Fig. 2, l'élément lumineux plat 1 est réalisé sous la forme d'un élément feuilleté avec un premier substrat 1.1, un deuxième substrat transparent 1.2 et une couche adhésive 1.3 assemblant à plat l'une à l'autre les deux substrats. Entre la couche adhésive 1.3 et le substrat 1.2 est disposé un élément électroluminescent plat 3.1, éventuellement disposé sur un film de support propre, qui forme le champ lumineux 3. La structure précise (stratifiée) de celui-ci est ici supposée connue. On signalera seulement qu'une électrode superficielle supérieure de cet élément lumineux est indiquée ici par une ligne horizontale interrompue, et que l'élément lumineux est assemblé à plat, d'une façon non représentée plus en détail ici, également avec le substrat transparent 1.2 (par exemple par une autre couche adhésive mince).

L'élément lumineux séparé 4 se trouve sur le bord droit de la représentation en coupe dans la région du cadre opaque 2. Celui-ci a, comme on peut également le voir dans la Fig. 1, une petite découpe dans la région de son recouvrement de surface (vu en projection verticale sur le plan du substrat 1.2) avec l'élément lumineux 4. Ce dernier n'est ici pas tramé, contrairement au champ lumineux 3, mais sa surface est pleine, de telle façon qu'il produise une plus grande densité de lumière, même si l'on utilise le même revêtement électroluminescent que pour le champ lumineux 3. De plus, il est prévu un dispositif optique 5 sous la forme d'une lentille plane insérée dans l'élément feuilleté, qui concentre et oriente la lumière émise parallèlement par l'élément lumineux séparé 4, comme cela est indiqué schématiquement par un cône de lumière 6. Ici, la lumière est émise pratiquement perpendiculairement au plan du substrat.

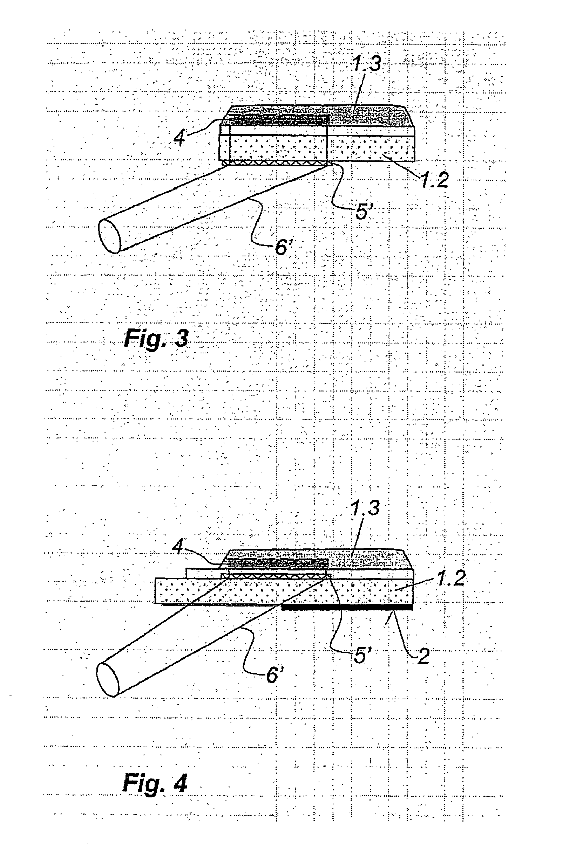

La situation est différente dans la Fig. 3, où un dispositif optique 5' produit un cône de lumière 6' fortement dévié par rapport à la perpendiculaire au plan du substrat. Ce dispositif optique 5' est un hologramme en film, qui est ici collé sur la face extérieure du substrat 1.2. On pourrait aussi insérer cet hologramme dans l'élément feuilleté, comme la lentille plane 5. On doit cependant alors compenser ou tenir compte, le cas échéant, de la réfraction de la lumière à la transition entre le substrat 1.2 et l'ambiance.

La structure représentée dans la Fig. 4 montre une forme de réalisation appropriée à cet effet, qui peut constituer une combinaison des formes de réalisation des Fig. 2 et 3. Dans ce cas, le dispositif optique 5' est situé à l'intérieur. Il est à nouveau utilisé pour l'orientation et/ou la concentration de la lumière émise par l'élément lumineux 4. Pour éviter une réflexion totale sur la couche limite (par exemple verre-air) de la surface extérieure du substrat 1.2 (la lumière émise serait dans ce cas transmise à l'intérieur du substrat 1.2), cette surface extérieure est pourvue d'une couche antireflets appropriée 7. Celle-ci peut être prévue localement, donc seulement à l'endroit de sortie désiré du rayon lumineux, ou sur toute la surface.
Avec une telle combinaison, on pourrait même réaliser un recouvrement large ou même total de la source de lumière proprement dite (élément lumineux 4) avec un revêtement opaque disposé sur celle-ci et ainsi éventuellement une protection contre l'éblouissement. A l'aide de l'élément optique 5', la lumière est déviée dans le substrat transparent 1.2 le long du revêtement et sort seulement ensuite en un autre endroit du substrat 1.2. Avec des dispositifs optiques appropriés, la lumière peut être conduite de façon connue en soi d'abord sur une certaine distance dans le verre ou la matière plastique du substrat et ensuite être à nouveau menée à l'extérieur en un endroit prédéterminé à l'aide d'une couche antireflets ou d'un autre dispositif optique.

## Revendications

1. Elément lumineux plat avec au moins un substrat et un revêtement assemblé à plat à celui-ci et émettant de la lumière, qui comprend plusieurs éléments lumineux pouvant être électriquement connectés séparément les uns à côté des autres, dans des parties différentes de la surface, pour obtenir des effets lumineux différents, **caractérisé en ce qu'**il est prévu au moins un élément lumineux séparé (4) avec une puissance lumineuse accrue par rapport à la luminosité de la surface (3) et avec une émission de lumière dirigée.

2. Elément lumineux plat selon la revendication 1, **caractérisé en ce qu'**il est prévu, dans la région de l'au moins un élément lumineux séparé (4) et dans sa direction d'émission, un dispositif optique (5, 5') destiné à concentrer et/ou à orienter la lumière émise par l'élément lumineux séparé (4).

3. Elément lumineux plat selon la revendication 1 ou 2, **caractérisé en ce que** l'élément lumineux plat est disposé dans un élément feuilleté entre deux substrats (1.1, 1.2), dont au moins un (1.2) est transparent pour la lumière émise par l'élément lumineux (4).

4. Elément lumineux plat selon la revendication 2 ou 3, **caractérisé en ce que** le dispositif optique (5, 5') est disposé sur ou dans le substrat (1.2) laissant passer la lumière de l'élément lumineux séparé (4).

5. Elément lumineux plat selon l'une quelconque des revendications 2 à 4, **caractérisé en ce que** le dispositif optique est une lentille (5), en particulier une lentille plane.

6. Elément lumineux plat selon l'une quelconque des revendications 2 à 4, **caractérisé en ce que** le dispositif optique est un élément holographique (5'), en particulier en forme de film avec des microprismes, qui est transparent pour la lumière émise mais qui la dévie.

7. Elément lumineux plat selon l'une quelconque des revendications 2 à 4, **caractérisé en ce que** le dispositif optique est un miroir plan, qui est transparent pour la lumière émise, mais qui la dévie.

8. Elément lumineux plat selon la revendication 2 ou 3, **caractérisé en ce que** le dispositif optique (5) est disposé directement sur l'élément lumineux.

9. Elément lumineux plat selon l'une quelconque des revendications précédentes 3 à 8, **caractérisé en ce qu'**au moins une partie de la lumière émise par l'élément lumineux séparé (4) est guidée à l'intérieur du substrat (1.2) laissant passer la lumière émise par l'élément lumineux séparé (4), qui sert de guide d'ondes lumineuses, et est émise en un endroit éloigné de l'élément lumineux (4).

10. Elément lumineux plat selon l'une quelconque des revendications précédentes, **caractérisé en ce que** la direction d'émission de la lumière de l'élément lumineux séparé s'écarte de la perpendiculaire au plan de l'élément lumineux plat.

11. Elément lumineux plat selon l'une quelconque des revendications précédentes, **caractérisé en ce qu'**il est prévu une couche antireflets (7) au moins à l'endroit de la sortie du rayonnement lumineux de l'élément lumineux séparé (4).

12. Elément lumineux plat selon l'une quelconque des revendications précédentes, **caractérisé en ce qu'**il comprend au moins un élément de commutation pour connecter et/ou déconnecter au moins un élément lumineux (3, 4).

13. Elément lumineux plat selon la revendication 12, **caractérisé en ce que** le au moins un élément de commutation est un détecteur de contact ou d'approche associé à une surface de l'élément lumineux plat.

14. Elément lumineux plat selon l'une quelconque des revendications précédentes, **caractérisé en ce qu'**il est prévu, dans la région de la surface de l'élément lumineux séparé, un revêtement opaque (2), le long duquel la lumière sortante est déviée à l'aide du dispositif optique (5').

15. Utilisation d'un élément lumineux plat selon l'une quelconque des revendications précédentes pour l'équipement intérieur d'un véhicule.

16. Utilisation selon la revendication 15, dans laquelle l'élément lumineux plat forme un élément ou un substrat de toit d'un véhicule.

17. Utilisation d'un élément lumineux plat selon l'une quelconque des revendications précédentes 1 à 14 dans un équipement de bâtiment.

## Claims

1. A flat luminous element with at least one substrate and one coating, applied onto the surface of the latter and emitting light, that comprises several luminous elements capable of being separately electrically connected next to one another, in different parts of the surface, so as to obtain different luminous effects, **characterized in that** at least one separate luminous element (4) is provided with an enhanced luminous power relative to the luminosity of the surface (3) and with a light emission that is directed.

2. The flat luminous element as claimed in claim 1, **characterized in that,** in the region of the at least one separate luminous element (4) and in its direction of emission, an optical device (5, 5') designed to concentrate and/or to orient the light emitted by the separate luminous element (4) is provided.

3. The flat luminous element as claimed in claim 1 or 2, **characterized in that** the flat luminous element is disposed within a layered element in between two substrates (1.1, 1.2), at least one of which (1.2) is transparent to the light emitted by the luminous element (4).

4. The flat luminous element as claimed in claim 2 or 3, **characterized in that** the optical device (5, 5') is disposed on or in the substrate (1.2) that lets through the light from the separate luminous element (4).

5. The flat luminous element as claimed in any one of claims 2 to 4, **characterized in that** the optical device is a lens (5), in particular a plane lens.

6. The flat luminous element as claimed in any one of claims 2 to 4, **characterized in that** the optical device is a holographic element (5'), in particular in the form of a film with microprisms, that is transparent to the emitted light but which deviates it.

7. The flat luminous element as claimed in any one of claims 2 to 4, **characterized in that** the optical device is a plane mirror that is transparent to the emitted light but which deviates it.

8. The flat luminous element as claimed in claim 2 or 3, **characterized in that** the optical device (5) is disposed directly onto the luminous element.

9. The flat luminous element as claimed in any one of the preceding claims 3 to 8, **characterized in that** at least a part of the light emitted by the separate luminous element (4) is guided inside the substrate (1.2), that lets through the light emitted by the separate luminous element (4), acting as a light waveguide, and is emitted elsewhere well away from the luminous element (4).

10. The flat luminous element as claimed in any one of the preceding claims, **characterized in that** the direction of emission of the light from the separate luminous element deviates from the normal to the plane of the flat luminous element.

11. The flat luminous element as claimed in any one of the preceding claims, **characterized in that** an antireflection layer (7) is provided at least at the place of exit of the light ray from the separate luminous element (4).

12. The flat luminous element as claimed in any one of the preceding claims, **characterized in that** it comprises at least one switching element for connecting and/or disconnecting at least one luminous element (3, 4) .

13. The flat luminous element as claimed in claim 12, **characterized in that** the at least one switching element is a touch or proximity detector associated with one surface of the flat luminous element.

14. The flat luminous element as claimed in any one of the preceding claims, **characterized in that,** in the region of the surface of the separate luminous element, an opaque coating (2) is provided, along which the exiting light is deviated by means of the optical device (5').

15. The use of a flat luminous element as claimed in any one of the preceding claims for the interior equipment of a vehicle.

16. The use as claimed in claim 15, in which the flat luminous element forms a roofing substrate or element of a vehicle.

17. The use of a flat luminous element, as claimed in any one of the preceding claims 1 to 14, for equipping of a building.

## Patentansprüche

1. Flaches Leuchtelement mit mindestens einem Substrat und einer Beschichtung, die flach mit diesem verbunden ist und Licht abstrahlt, und welches mehrere Leuchtelemente umfasst, die nebeneinander in verschiedenen Teilen der Oberfläche getrennt elektrisch angeschlossen werden können, um unterschiedliche Lichteffekte zu erhalten, **dadurch gekennzeichnet, dass** mindestens ein separates Leuchtelement (4) mit einer Leuchtkraft, die gegenüber der Helligkeit der Oberfläche (3) erhöht ist, und mit einer gerichteten Lichtemission vorgesehen ist.

2. Flaches Leuchtelement nach Anspruch 1, **dadurch gekennzeichnet, dass** in dem Bereich des mindestens einen separaten Leuchtelements (4) und in dessen Emissionsrichtung eine optische Einrichtung (5, 5') vorgesehen ist, die bestimmt ist, das von dem separaten Leuchtelement (4) emittierte Licht zu bündeln und/oder auszurichten.

3. Flaches Leuchtelement nach Anspruch 1 oder 2, **dadurch gekennzeichnet, dass** das flache Leuchtelement in einem Verbundelement zwischen zwei Substraten (1.1, 1.2) angeordnet ist, wovon mindestens eins (1.2) für das von dem Leuchtelement (4) emittierte Licht transparent ist.

4. Flaches Leuchtelement nach Anspruch 2 oder 3, **dadurch gekennzeichnet, dass** die optische Einrichtung (5, 5') auf oder in dem Substrat (1.2) angeordnet ist, welches das Licht des separaten Leuchtelements (4) hindurchlässt.

5. Flaches Leuchtelement nach einem der Ansprüche 2 bis 4, **dadurch gekennzeichnet, dass** die optische Einrichtung eine Linse (5), insbesondere eine flache Linse, ist.

6. Flaches Leuchtelement nach einem der Ansprüche 2 bis 4, **dadurch gekennzeichnet, dass** die optische Einrichtung ein holographisches Element (5'), insbesondere in Form eines Films mit Mikroprismen, das für das emittierte Licht transparent ist, aber es ablenkt, ist.

7. Flaches Leuchtelement nach einem der Ansprüche 2 bis 4, **dadurch gekennzeichnet, dass** die optische Einrichtung ein planer Spiegel ist, der für das emittierte Licht transparent ist, aber dessen Weg verändert.

8. Flaches Leuchtelement nach Anspruch 2 oder 3, **dadurch gekennzeichnet, dass** die optische Einrichtung (5) direkt auf dem Leuchtelement angeordnet ist.

9. Flaches Leuchtelement nach einem der vorhergehenden Ansprüche 3 bis 8, **dadurch gekennzeichnet, dass** wenigstens ein Teil des von dem separaten Leuchtelement (4) emittierten Lichts in das Innere des Substrats (1.2) geleitet, welches das von dem separaten Leuchtelement (4) emittierte Licht hindurchlässt und als Lichtwellenleiter dient, und zu einer von dem Leuchtelement (4) entfernten Stelle geschickt wird.

10. Flaches Leuchtelement nach einem der vorhergehenden Ansprüche, **dadurch gekennzeichnet, dass** die Emissionsrichtung des Lichts von dem separaten Leuchtelement von der Senkrechten zur Ebene des flachen Leuchtelements abweicht.

11. Flaches Leuchtelement nach einem der vorhergehenden Ansprüche, **dadurch gekennzeichnet, dass** eine Antireflexschicht (7) wenigstens an der Stelle des Ausgangs der Lichtstrahlung von dem separaten Leuchtelement (4) vorgesehen ist.

12. Flaches Leuchtelement nach einem der vorhergehenden Ansprüche, **dadurch gekennzeichnet, dass** es mindestens ein Umschaltelement für den Anschluss und/oder die Trennung mindestens eines Leuchtelements (3, 4) umfasst.

13. Flaches Leuchtelement nach Anspruch 12, **dadurch gekennzeichnet, dass** das mindestens eine Umschaltelement ein Kontakt- oder Näherungsdetektor ist, der mit einer Fläche des flachen Leuchtelements verbunden ist.

14. Flaches Leuchtelement nach einem der vorhergehenden Ansprüche, **dadurch gekennzeichnet, dass** in dem Bereich der Oberfläche des separaten Leuchtelements eine opake Beschichtung (2) vorgesehen ist, entlang welcher das austretende Licht mittels der optischen Einrichtung (5') abgelenkt wird.

15. Verwendung eines flachen Leuchtelements nach einem der vorhergehenden Ansprüche für die Innenausstattung eines Fahrzeugs.

16. Verwendung nach Anspruch 15, bei welcher das flache Leuchtelement ein Dachelement oder -substrat eines Fahrzeugdachs bildet.

17. Verwendung eines flachen Leuchtelements nach einem der vorhergehenden Ansprüche 1 bis 14 für eine Gebäudeausrüstung.
